# EUROPEAN PATENT SPECIFICATION

(11) **EP 4 374 749 B1**
(45) Date of publication and mention of the grant of the patent: **28.01.2026**
(21) Application number: 21950955.1
(22) Date of filing: 21.07.2021
(51) Int. Cl.: A47J 31/06, B65D 85/804, A47J 31/08

(54) **DRIP BAG**
AUFGUSSBEUTEL
SACHET-FILTRE

(43) Date of publication of application: 29.05.2024
(73) Proprietor: Ohki Co., Ltd., Chuo-ku Osaka-shi Osaka 541-0058 (JP)
(72) Inventor: SAITO, Mitsunori, Osaka-shi, Osaka 541-0058 (JP)
(74) Representative: TBK
(86) International application number: PCT/JP2021/027334
(87) International publication number: WO 2023/002605

(56) References cited:
- WO-A1-2014/092122
- WO-A1-2014/092122
- WO-A1-2014/092136
- WO-A1-2014/092136
- JP-A- 2006 036 357
- JP-A- 2012 125 406
- JP-A- 2012 125 406

## Description

### Technical Field

The present invention relates to a drip bag to be hooked on an upper part of a container such as a cup, so that an extract such as coffee, black tea, green tea, and herbal medicine can be easily obtained by dripping.

### Background Art

Conventionally, as a drip bag that makes it possible to easily enjoy drip coffee, a drip bag that includes a bag main body that is made of a water permeable filter sheet and opens at the top end and hooking portions that are made of a thin plate-like material and disposed on two opposed outer surfaces of the bag main body, and that is configured to be able to be hooked on an opening wall of a cup by pulling the hooking portions in opposite directions has been widely prevalent (JP 4 079 041 B2). The bag main body of such a drip bag has a rectangular opening shape if a pair of vertical folding lines extending in a vertical direction is formed in the belt-shaped upper bonded portions, which are made of the thin plate-like material and disposed along the top side of the bag main body.

In contrast, to make the opening shape of the bag main body more circular and thereby increase the opening area, it has been proposed to form a pair of oblique folding lines in the upper bonded portions, which are made of a thin plate-like material and disposed along the opening of the bag main body (JP 5 858 172 B2).

Meanwhile, there has been proposed a drip bag that includes a bag main body in which an extraction material is sealed and also includes hooking members that are made of a thin plate-like material and disposed on two opposed outer surfaces of the bag main body. In the drip bag, a pair of unsealing protrusions made of the thin plate-like material protrudes alternately from the upper edge of the bag main body so that the upper edge of the bag main body can be easily opened for extraction (JP 5 817 881 B2).

### Citation List

Reference is also made to JP 2006 036357 A, JP 2012 125406 A, WO 2014/092122 A1 and WO 2014/092136 A1, which disclose a drip bag as specified in the preamble of claim 1.

### Summary of Invention

### Technical Problem

According to the drip bag described in JP 5 858 172 B2, the pair of oblique folding lines in the upper bonded portions, which are made of a thin plate-like material and disposed along the opening of the bag main body, is bent by simply pulling the pair of hooking portions of the drip bag in opposite directions. With the pair of hooking portions hooked on a cup, the bag main body opens in a substantially octagonal opening shape by itself. This can increase the opening area as compared to the case where the opening shape is rectangular. In such a case, the pair of oblique folding lines is preferably formed to be easily bendable. For that purpose, the oblique folding lines may be made with perforations, in which case it is desirable that the length of ties between the perforations be made as short as possible with respect to the length of cuts of the perforations, that the number of ties be made as low as possible, and that the top ends of the pair of oblique folding lines be located as close to the top sides of the upper bonded portions as possible.

However, if the top ends of the pair of oblique holding lines and the top sides of the upper bonded portions are located as close as possible, the top sides of the upper bonded portions can be broken at the top ends of the oblique folding lines due to misalignment of the perforation formation positions or the like. If the drip bag is hooked on a cup with the top sides of the upper bonded portions broken, the force applied to pull the bag main body in opposite directions concentrates on the broken areas. This concentration of force distorts the opening shape of the bag main body and makes the drip bag difficult to pour hot water in.

In view of the foregoing, an object of the present invention is to provide a drip bag including thin plate-like members disposed on two respective opposed outer surfaces of a bag main body of the drip bag, the thin plate-like members including hooking portions and upper bonded portions along a top side of the bag main body, wherein the risk of breakage of the upper bonded portions, occurring when the hooking portions are pulled in opposite directions and the drip bag is hooked on a cup, is eliminated, and the drip bag allows the opening area of the bag main body to be stably increased, preferably allows easy opening of the bag main body when an extraction material is sealed in such a drip bag, and more preferably allows the bag main body to be even more easily opened as compared to a case where unsealing protrusions described in JP 5 817 881 B2 are provided.

### Solution to Problem

The present inventor has found the following and completed the present invention: Suppose that a drip bag includes thin plate-like members disposed on two respective opposed outer surfaces of a bag main body of the drip bag (hereinafter, also referred to as the front and back of the bag main body), and the thin plate-like members include upper bonded portions disposed along a top side of the bag main body and hooking portions capable of being pulled out from the bag main body. If oblique folding lines that obliquely intersect a width centerline of the upper bonded portions are formed in the upper bonded portions: (i) pulling the hooking portions on the front and back of the bag main body in opposite direction twists the upper bonded portions about the oblique folding lines; (ii) this twist enhances the rigidity of the upper bonded portions and the upper bonded portions bend roundly into a deflected shape; (iii) the amount of deflection does not change much and remains substantially constant regardless of a magnitude change in the force by which the hooking portions on the front and back of the bag main body are pulled in opposite directions; and (iv) if, for example, the oblique folding lines are adjusted in size and the like so that the opening of the bag main body has a regular hexagonal shape with round corners corresponding to the oblique folding lines when the drip bag is hooked on a cup with a small opening diameter, then, even when the drip bag is hooked on a cup with a large opening diameter and the hooking portions are pulled far out from the bag main body, the opening of the bag main body is maintained in a round-cornered regular hexagonal shape.

More specifically, the present invention provides a drip bag as specified in claim 1.

The present invention also provides a mode where the bag main body of the foregoing drip bag is filled with an extraction material and the bag main body is sealed.

In particular, a drip bag with unsealing protrusions is provided, having the features set forth in claim 8. In other words, within the foregoing drip bag of which the bag main body is filled with the extraction material and the bag main body is sealed, an easily cleavable line is formed at the top side of the bag main body; and a pair of unsealing protrusions extended from the upper bonded portions on the two opposed outer surfaces of the bag main body protrudes alternately from the top side of the bag main body.

In addition, there is provided a mode of the foregoing drip bag with unsealing protrusions, having the features set forth in claim 9, where the unsealing protrusions and the bag main body are bonded at an intersection between lateral sides of the pair of unsealing protrusions and the top side of the bag main body in midsections of the thin plate-like members in a width direction.

Moreover, there is provided a mode of the foregoing drip bag with unsealing protrusions, having the features set forth in claim 10, where cuts are formed in midsections of the upper bonded portions in the width direction, the cuts being formed by extending top sides of the upper bonded portions, at which the unsealing protrusions are not extended, into roots of the unsealing protrusions.

### Advantageous Effects of Invention

According to the present invention, the thin plate-like members on the front and back of the bag main body include the upper bonded portions disposed along the top side of the bag main body, and the upper bonded portions have the oblique folding lines obliquely intersecting the width centerline of the upper bonded portions. If the bag main body is opened by pulling the hooking portions on the front and back of the bag main body in opposite directions, the midsections of the upper bonded portions twist about the oblique folding lines. Since the twist enhances the rigidity of the upper bonded portions, the upper bonded portions are deflected to bend roundly. The amount of deflection hardly changes and remains substantially constant even if the hooking portions are pulled with great force in opposite directions. Pulling the hooking portions on the front and back of the bag main body in opposite directions thus makes the side areas of the front and back of the bag main body straight in shape, these side areas being located between the upper bonded portions on the front and back of the bag main body. If the side areas of the bag main body and the upper bonded portions are adjusted in width so that the bag main body at that time has a regular hexagonal opening shape, and the amount of deflection is adjusted by adjusting the length of the oblique folding lines in the width direction of the bag main body, the angle of the oblique folding lines with respect to the width centerline of the bag main body, and other properties thereof, then the opening shape of the bag main body when the drip bag is hooked on a cup is regular hexagonal with round corners corresponding to the oblique folding lines in the upper bonded portions, regardless of the opening diameter of the cup. This effect increases the opening area as compared to the case where vertical folding lines are formed in the upper bonded portions to make the opening shape rectangular.

To roundly deflect the upper bonded portions into the opening shape of the bag main body as described above, it is preferable that the top ends of the oblique folding lines are not just barely adjacent to the top sides of the upper bonded portions as possible. This can reduce the risk of breakage of the top sides of the upper bonded portions by the top ends of the oblique folding lines, and the opening area of the bag main body can be stably increased.

In a mode of the present invention, an oblique top side portion of the upper bonded portion or an oblique cut extending from the top side of the upper bonded portion along the top end of the oblique folding line is located on either one side of the left and right of the oblique folding line of the upper bonded portion, and an oblique bottom side portion of the upper bonded portion or an oblique cut extending from a bottom side of the upper bonded portion along a bottom end of the oblique folding line is located on the other side of the left and right of the oblique folding line. In such a mode, the twist about the oblique folding line when the bag main body is opened becomes stronger, and this twist makes the upper bonded portion harder to bend. This increases the radius of curvature of the upper bonded portions when the hooking portions on the front and back of the bag main body are pulled in opposite directions, and the opening of the bag main body can be made more circular in shape.

In the mode with the unsealing protrusions where the bag main body is filled with the extraction material and sealed, and the easily cleavable line is formed at the top side of the bag main body and the pair of unsealing protrusions extended from the upper bonded portions on the front and back of the bag main body protrude alternately from the top side of the bag main body, the bag main body can be easily unsealed when using the drip bag for extraction.

In such a case, if the unsealing protrusions and the bag main body are bonded at the intersection between the pair of unsealing protrusions and the top side of the bag main body, the unsealing by pulling the pair of unsealing protrusions in opposite directions becomes easier.

If the cuts are formed in the midsections of the upper bonded portions in the width direction by extending the top sides of the upper bonded portions, at which the unsealing protrusions are not extended, into the roots of the unsealing protrusions, the midsections of the upper bonded portions can be roundly deflected in the opening shape of the bag main body so that the opening has a round-cornered hexagonal shape as with the case where there are no unsealing protrusions, although the lengths of the upper bonded portions in the vertical direction of the bag main body where the unsealing protrusions are located are greater.

### Brief Description of Drawings

[Fig. 1A] Fig. 1A is a plan view of a drip bag 1A according to an embodiment.
[Fig. 1B] Fig. 1B is an enlarged view of an area A of the drip bag 1A according to the embodiment.
[Fig. 2] Fig. 2 is a developed view of the drip bag 1A according to the embodiment.
[Fig. 3] Fig. 3 is a developed view of a modification of a drip bag 1A' according to an embodiment.
[Fig. 4] Fig. 4 is a perspective view of a state where the drip bag 1A according to the embodiment is opened and hooked on a cup.
[Fig. 5A] Fig. 5A is a top view of the state where the drip bag 1A according to the embodiment is opened and hooked on the cup.
[Fig. 5B] Fig. 5B is a top view of a state where the drip bag 1A according to the embodiment is opened and hooked on a cup having a large opening diameter.
[Fig. 6] Fig. 6 is a developed view of a drip bag 1B according to an embodiment, where the bottom sides of two opposed surfaces of the bag main body are connected.
[Fig. 7] Fig. 7 is a top view of a state where the drip bag 1B according to the embodiment is hooked on a cup.
[Fig. 8A] Fig. 8A is a plan view of a drip bag 1C according to an embodiment.
[Fig. 8B] Fig. 8B is an enlarged view of an area A of the drip bag 1C according to the embodiment.
[Fig. 9] Fig. 9 is a perspective view of a state where the drip bag 1C according to the embodiment is opened and hooked on a cup.
[Fig. 10] Fig. 10 is a top view of the state where the drip bag 1C according to the embodiment is opened and hooked on the cup.
[Fig. 11A] Fig. 11A is a plan view of a drip bag 1D according to an embodiment.
[Fig. 11B] Fig. 11B is an enlarged view of an area A1 of the drip bag 1D according to the embodiment.
[Fig. 12] Fig. 12 is a side view of the drip bag 1D according to the embodiment.
[Fig. 13A] Fig. 13A is a developed view of the drip bag 1D according to the embodiment.
[Fig. 13B] Fig. 13B is an enlarged view of an area A2 in the developed view of the drip bag 1D according to the embodiment.
[Fig. 14] Fig. 14 is a perspective view of a state where the drip bag 1D according to the embodiment is opened and hooked on a cup.
[Fig. 15] Fig. 15 is a top view of the state where the drip bag 1D according to the embodiment is opened and hooked on the cup.
[Fig. 16] Fig. 16 is a partial enlarged plan view of a drip bag 1E that is the drip bag 1D according to an embodiment, modified in the area A1.
[Fig. 17] Fig. 17 is a partial enlarged plan view of a drip bag 1F that is the drip bag 1D according to an embodiment, modified in the area A1.
[Fig. 18] Fig. 18 is a partial enlarged plan view of a drip bag 1G that is the drip bag 1D according to an embodiment, modified in the area A1.
[Fig. 19] Fig. 19 is a partial enlarged plan view of a drip bag 1H that is the drip bag 1D according to an embodiment, modified in the area A1.
[Fig. 20] Fig. 20 is a partial enlarged plan view of a drip bag 1I that is the drip bag 1D according to an embodiment, modified in the area A1.
[Fig. 21] Fig. 21 is a partial enlarged plan view of a drip bag 1J that is the drip bag 1D according to an embodiment, modified in the area A1.
[Fig. 22] Fig. 22 is a plan view of a drip bag 1K according to an embodiment.
[Fig. 23] Fig. 23 is a perspective view of a state where the drip bag 1K according to the embodiment is hooked on a cup.
[Fig. 24] Fig. 24 is a plan view of a drip bag 1L according to an embodiment.
[Fig. 25] Fig. 25 is a perspective view of a state where a hooking portion of the drip bag 1L according to the embodiment is pulled out.
[Fig. 26] Fig. 26 is a plan view of a drip bag 1x of a comparative example.
[Fig. 27] Fig. 27 is a top view of a state where the drip bag 1x of the comparative example is opened and hooked on a cup.

### Description of Embodiments

The present invention will be specifically described below with reference to the drawings. In the drawings, the same reference numerals represent the same or equivalent components.

### Overall configuration of drip bag:

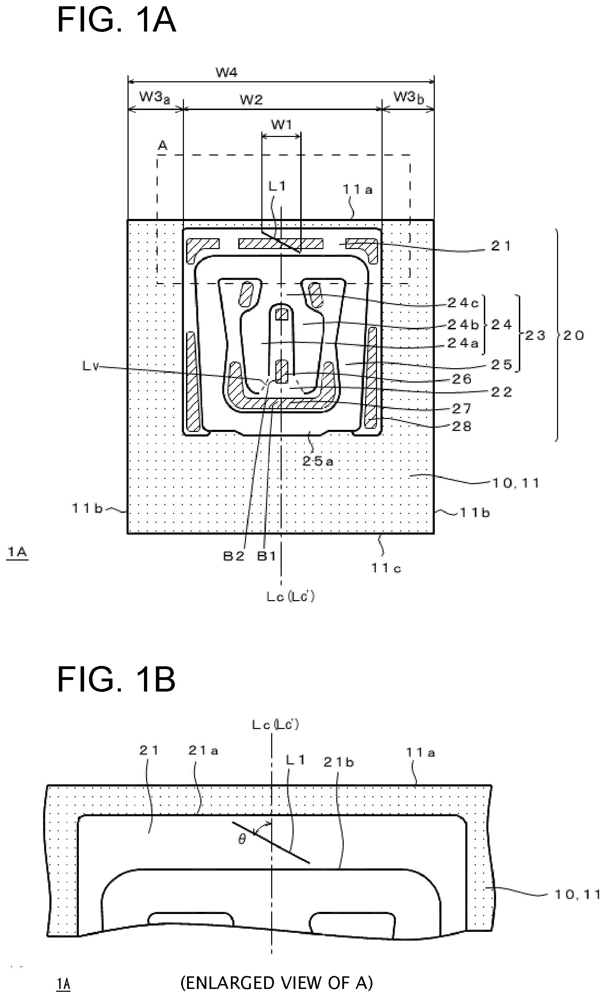

Fig. 1A is a plan view of a drip bag 1A according to an embodiment of the present invention. In Fig. 1A, obliquely hatched areas represent bonded areas of a water permeable filter sheet 10 with a thin plate-like member 20. Note that the bonded areas are not limited to the shown configuration. The bonded areas are usually not visible from outside because of the opacity of the thin plate-like member 20.

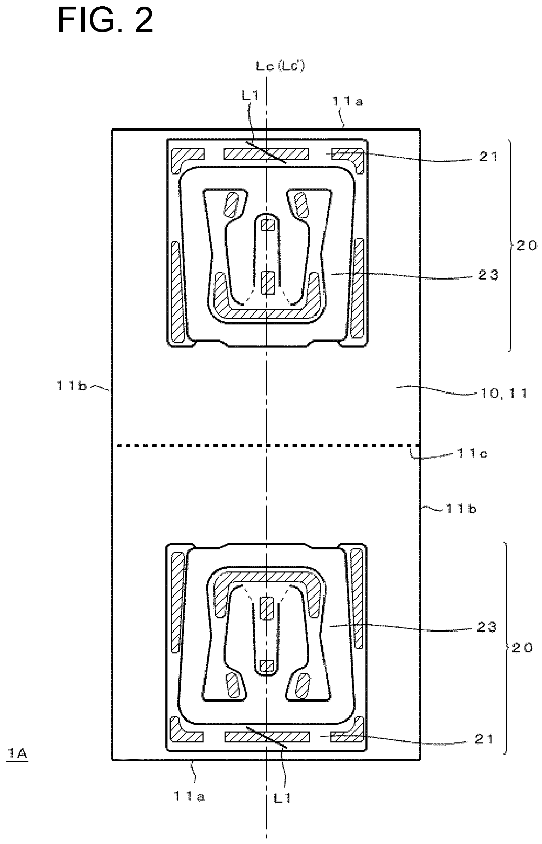

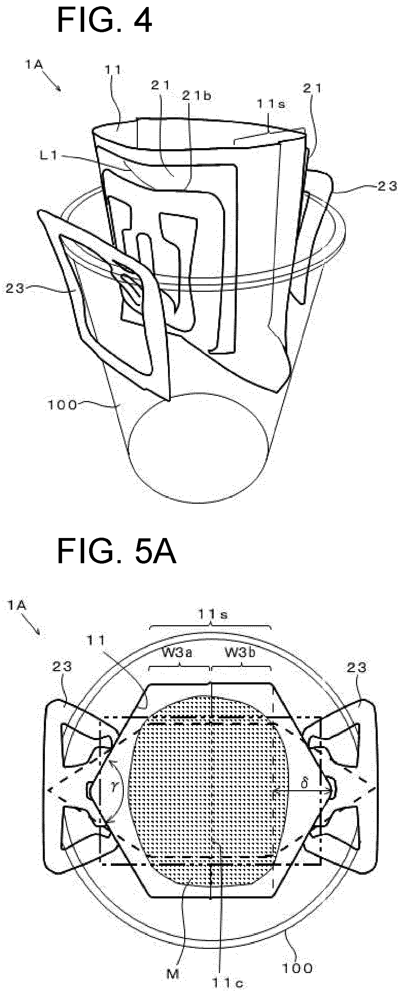

Fig. 1B is an enlarged view of an area A of Fig. 1A. Fig. 2 is a developed view of the drip bag 1A. Fig. 4 is a perspective view of a state where the drip bag 1A is opened and hooked on a cup 100. Fig. 5A is a top view thereof.

This drip bag 1A includes a bag main body 11 that is made of the water permeable filter sheet 10, and thin plate-like members 20 that are made of a thin plate-like material and disposed on two opposed outer surfaces of the bag main body 11 (i.e., the front and back of the bag main body 11).

When a user extracts an extraction material such as coffee using the drip bag 1A, an extraction material M is put into the bag main body 11 (Fig. 5A). Before use for extraction, the bag main body 11 is thus a flat bag that is open at a top side 11a and closed at three sides including both lateral sides 11b and a bottom side 11c (Fig. 1A).

However, according to the present invention, the drip bag may be an extraction material containing drip bag where the bag main body 11 is filled with the extraction material and sealed. In such a case, an easily cleavable line (not shown) such as a set of unsealing perforations is formed in the bag main body 11 along the top side 11a of the bag main body 11 in which the extraction material is sealed, so that the top end of the bag main body 11 can be easily opened.

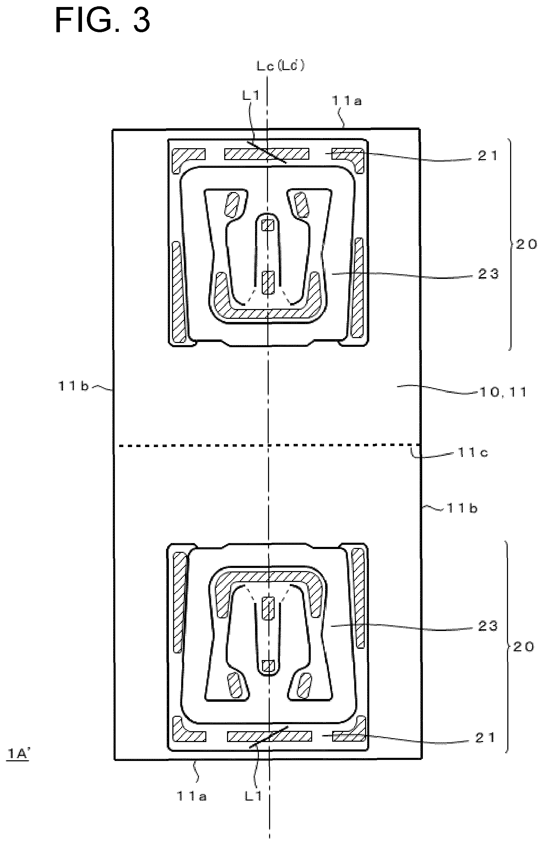

In the drip bag 1A according to the present embodiment, the thin plate-like members 20 on the front and back of the bag main body 11 are located symmetrically about a point in the developed view shown in Fig. 2. Note that according to the present invention, the thin plate-like members 20 on the front and back of the bag main body 11 may be located symmetrically about a line, in a similar manner as in the developed view of a drip bag 1A' shown in Fig. 3.

Each of the thin plate-like members 20 on the front and back of the bag main body 11 includes an upper bonded portion 21 fixed to the bag main body 11 along the top side 11a of the bag main body 11, a central portion 22 fixed to the bag main body 11 on a bottom side-11c side of the bag main body 11 relative to the upper bonded portion 21, and a hooking portion 23 continuous with the central portion 22 and disposed to be capable of being pulled out from the bag main body 11. The hooking portion 23 includes an arm part 24 continuous with the central portion 22 and also includes a hook part 25 continuous with the arm part 24.

The upper bonded portion 21 is formed in a belt shape at least in the center of the bag main body 11 in the width direction, and has a bonded area with the bag main body 11 and is thereby fixed to the bag main body 11. Reinforcing portions 28 extending downward along the lateral sides 11b of the bag main body 11 are located continuously with both left and right ends of the upper bonded portion 21. In the present invention, the reinforcing portions 28 are provided as appropriate.

To facilitate deflection of the upper bonded portion 21 to roundly shape the opening of the bag main body 11, the bonded areas of the thin plate-like member 20 and the bag main body 11 are preferably absent at positions adjoining a bottom side 21b of the upper bonded portion 21 in the center of the upper bonded portion 21 in the width direction. When the hooking portion 23 has been pulled out from the bag main body 11, the thin plate-like member 20 is preferably absent at a position where it was adjoined with the bottom side 21b in the center of the upper bonded portion 21 in the width direction (Fig. 4).

The central portion 22 is fixed to the bag main body 11 at the bottom-side side of the bag main body 11 relative to the upper bonded portion 21. However, a bonded area does not necessarily need to be provided between the central portion 22 and the bag main body 11 for the purpose of fixing. The central portion 22 may be fixed to the bag main body 11 by a first central bonded portion 26 continuous with the central portion 22 in the upper side thereof and a second central bonded portion 27 continuous with the central portion 22 in the lower side thereof both including a bonded area with the bag main body 11.

The arm part 24 extends toward the top side of the bag main body from the central portion 22, and can be pulled out from the bag main body 11 with its central portion 22-side end as a fixed end.

A part of the arm part 24 closer to the central portion 22 branches into two so that branched arm parts 24a and 24b are juxtaposed at a distance from each other with a width centerline Lc of the upper bonded portion 21 therebetween. The juxtaposed parts are connected at the top into an arm part connection part 24c, and the arm part connection part 24c is continuous with the hook part 25. The area between the two arm parts 24a and 24b serves as the first central bonded portion 26 bonded to the bag main body 11. The second central bonded portion 27 is formed on both left and right sides of the arm part 24.

At the fixed end of each of the arm parts 24a and 24b, an imaginary line Lv connecting the bottom ends of both lateral sides of the pullable portion of the arm part 24a or 24b lies obliquely with respect to the vertical direction of the bag main body. If the hooking portions 23 on the front and back of the bag main body 11 are pulled in opposite directions and the drip bag 1A is hooked on a cup, the thin plate-like members 20 are thus bent at the roots of the arm parts 24a and 24b by the pulling force. This bending at the roots prevents the pulling force from acting in any way other than to pull the front and back surfaces of the bag main body 11 in opposite directions, so that the bag main body 11 opens easily.

Connecting the arm parts 24a and 24b at the top with the arm part connection part 24c enables the two branched arm parts 24a and 24b to be pulled out from the bag main body 11 without a twist, whereby the hooking portions 23 are hooked on a cup in a stable state.

Note that an effect of the present invention, whereby the twist of the upper bonding portions 21 about oblique folding lines L1 can deflect the upper bonding portions 21 by a substantially constant amount of deflection even if the strength to pull the hooking portions 23 on the front and back of the bag main body 11 in opposite directions varies depending on the opening diameter of the cup on which the drip bag 1A is hooked can be obtained by configuring the arm part 24 as described in Patent Document 1 instead of branching the arm part 24 into two.

A pair of a left part and a right part of the hook part 25 is formed to be continuous with the upper portion of the arm part 24 and extend from the continuous portion toward the bottom side of the bag main body 11 outside the arm part 24, at a distance from the arm part 24. An area between the hook part 25 and the arm part 24 serves as the second center bonded portion 27 bonded to the bag main body 11. The pair of left and right hook parts 25 are connected by a connection part 25a at the bottom.

This drip bag 1A is characterized in that the upper bonded portion 21 has the oblique folding line L1 obliquely intersecting the centerline Lc of a width W2 of the upper bonded portion 21.

The oblique folding line L1 can be made of a cut, perforations, a half-cut, scoring, etc. Of these, a cut is preferably used as the oblique folding line L1 in view of facilitating the effect of roundly deflecting the midsection of the upper bonded portion 21.

In the present embodiment, the width centerline Lc of the upper bonded portion 21 matches a width centerline Lc' of the bag main body 11.

If the hooking portions 23 on the front and back of the bag main body 11 are both pulled out and pulled in opposite directions to open the bag main body 11 at the top side 11a of the bag main body 11, the hooking portions 23 can be hooked on a cup 100 as shown in Fig. 4. In such a case, even if the cup 100 has a small opening diameter, the upper bonded portions 21 twist about the oblique folding lines L1 so that the upper bonded portions 21 are roundly deflected at an angle γ and by an amount of deflection δ as in a top view shown in Fig. 5A because the hooking portions 23 on the front and back of the bag main body 11 are pulled in opposite directions. As will be described below, the angle γ and the amount of deflection δ are determined by an angle θ that the oblique folding line L1 forms with respect to the width centerline Lc of the upper bonded portion 21, a length W1 of the oblique folding line L1 in the width direction of the bag main body 11, the width W2 of the upper bonded portion 21, the hardness and thickness of the thin plate-like member 20, etc. For example, the angle γ can be set to 120°. Here, if side areas 11s of the bag main body 11 located between the upper bonded portions 21 on the front and back of the bag main body 11 are straight in shape as shown in Fig. 5A, the opening of the bag main body 11 has a substantially regular hexagonal shape.

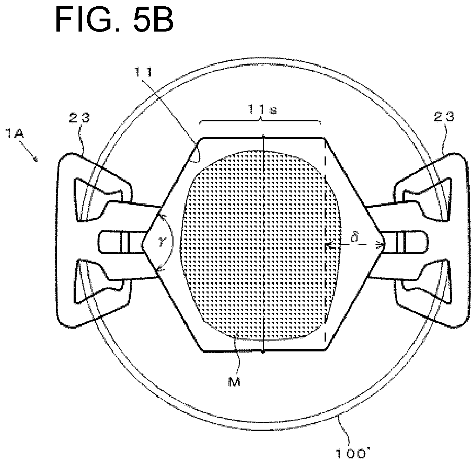

If the cup 100 has a large opening diameter, the hooking portions 23 on the front and back of the bag main body 11 are pulled with great force in opposite directions. However, since the upper bonded portions 21 twist about the oblique folding lines L1, the angle γ and the amount of deflection δ due to the deflection of the upper bonded portions 21 do not change much. Meanwhile, the pull-out angle of the hooking portions 23 with respect to the bag main body 11 (angle that the arm parts 24 of the hooking portions 23 pulled out from the bag main body 11 form with respect to the bag main body 11) increases easily as the hooking portions 23 are pulled with great force in opposite directions. The angle γ and the amount of deflection δ at the opening of the bag main body 11 are thus maintained and the shape of the opening of the bag main body 11 is also maintained substantially regular hexagonal if the drip bag 1A is hooked on a cup 100' having a large opening diameter as shown in Fig. 5B.

This drip bag 1A can thus maintain the opening of the bag main body 11 substantially regular hexagonal in shape regardless of the opening diameter of the cup 100.

To facilitate the arm parts 24 being pulled out from the bag main body 11 by pulling the hooking portions 23, bonded areas B1 and B2 between the thin plate-like member 20 and the bag main body 11 are preferably located just below the oblique folding line L1 (Fig. 1A).

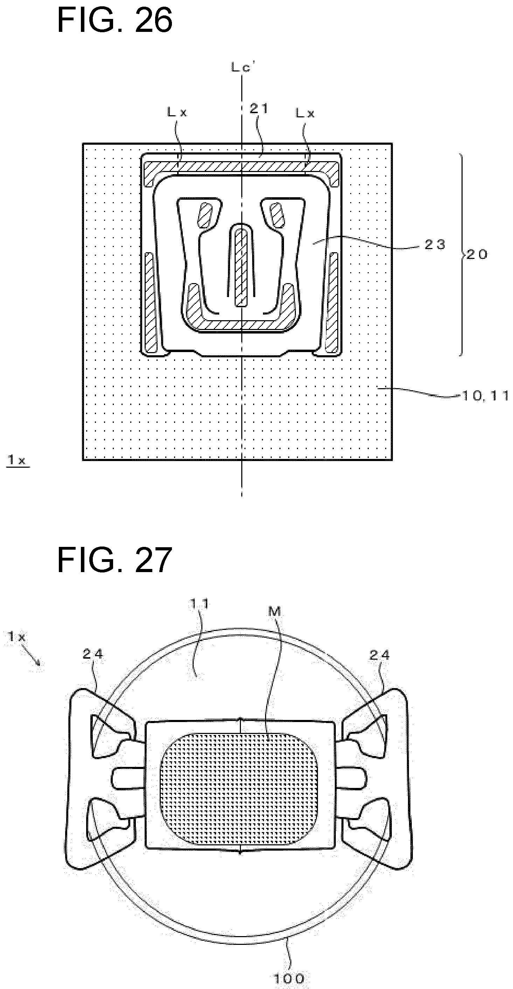

Take a drip bag 1x of a comparative example where, like the drip bag described in Patent Document 1, an upper bonded portion 21 includes a pair of vertical folding lines Lx extending in a vertical direction of a bag main body 11, located symmetrically about a width centerline Lc' of the bag main body 11 as shown in Fig. 26. If the drip bag 1x is hooked on a cup 100 and hooking portions 23 on the front and back of the bag main body 11 are pulled in opposite directions so that side areas 11s of the bag main body 11 located between the upper bonded portions 21 on the front and back of the bag main body 11 become straight in shape, then the bag main body 11 has a rectangular opening shape as shown in Fig. 27. The rectangle shown in a double-dotted dashed line in Fig. 5A represents the opening shape of the drip bag 1x of this comparative example. Take a drip bag of a comparative example (not shown) where a single vertical folding line extending in a vertical direction of the bag main body is disposed in the center of the upper bonded portion 21 instead of the oblique folding line L1. Here, the midsection of the upper bonded portion 21 is easily sharply bent along the vertical folding line. If the hooking portions 23 on the front and back of the bag main body 11 are pulled in opposite directions, the midsections of the upper bonded portions bend at an acute angle and the bag main body takes a flat hexagonal opening shape as shown in a broken line in Fig. 5A. In Fig. 5A, the peripheral length of the rectangle shown in the double-dotted dashed line and the peripheral length of the flat hexagon shown in the broken line are the same as that of the round-cornered hexagon of the drip bag 1A shown in the solid line. It can thus be seen that the drip bag 1A according to the embodiment has an increased opening area and is easy to pour hot water in, compared to the drip bags of the comparative examples.

In the drip bag according to the present invention, to prevent the upper bonded portion 21 from being broken at both ends of the oblique folding line L1, the oblique folding line L1 preferably reaches neither of the top side 21a and the bottom side 21b of the upper bonded portion 21 as shown in Fig. 1B. In particular, if the oblique folding line L1 is formed by a cut, the oblique folding line L1 preferably reaches neither of the top and bottom sides 21a and 21b of the upper bonded portion 21.

In view of ensuring the effect of the oblique folding line L1 that the opening of the bag main body 11 becomes a round-cornered hexagonal shape, the angle θ that the oblique folding line L1 forms with respect to the width centerline Lc of the upper bonded portion 21 is preferably 48° to 74°. The length W1 of the oblique folding line L1 in the width direction of the bag main body 11 can be set as appropriate depending on the hardness and thickness of the thin plate-like member 20, etc. Under normal circumstances, the length W1 is preferably 15% to 30% of the width of the portion of the thin plate-like member 20 to not be pulled out from the bag main body 11 (in the present embodiment, the width W2 of the upper bonded portion).

Moreover, to make the opening shape of the bag main body 11 closer to a regular hexagon, the width W2 of the upper bonded portion 21 is preferably 54% to 80% of a width W4 of the bag main body 11. In such a case, a distance W3a between the upper bonded portion 21 and the lateral side 11b of the bag main body on one of either the left or right side of the bag main body 11 and a distance W3b between the upper bonded portion 21 and the lateral side 11b of the bag main body on the other side are preferably the same. Setting the distances in such a manner shapes the bag main body 11 like a column without a twist between the bottom plane and the opening, and the substantially regular hexagonal opening shape of the bag main body 11 becomes symmetrical about the bottom side 11c of the bag main body 11 (Fig. 5A).

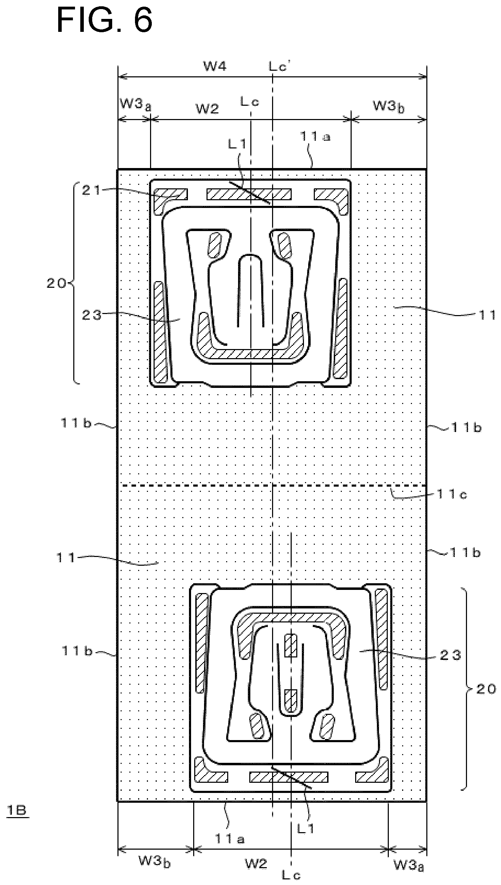

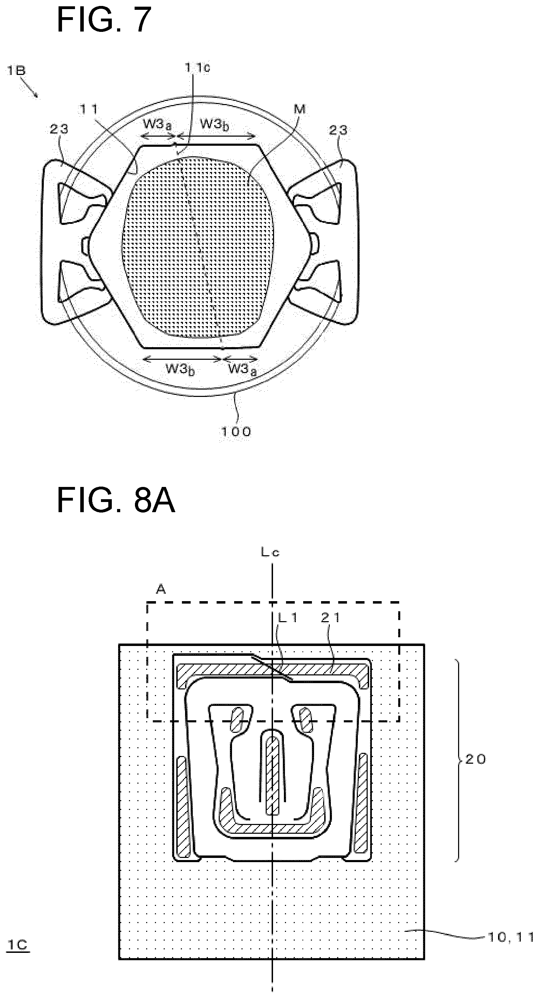

However, like a drip bag 1B shown in the developed view of Fig. 6, the foregoing drip bag 1A may be modified so that the distances W3a and W3b between the upper bonded portion 21 and the lateral sides 11b of the bag main body 11 on both left and right sides of the bag main body 11 are different from each other. Fig. 7 is a top view of a case where this drip bag 1B is hooked on the cup 100. As in this top view, the opening of the bag main body 11 can be shaped like a round-cornered substantially regular hexagon by setting the sum of the distances W3a and W3b (W3a + W3b) to 20% to 46% of the width W4 of the bag main body 11. Since the distances W3a and W3b are made different from each other, the shape of the opening is not symmetrical with respect to the bottom side 11c of the bag main body 11, and the bottom and the opening of the bag main body 11 are twisted.

### Bag Main Body:

The bag main body 11 is made of a water permeable filter sheet.

For example, various water permeable filter sheets that can be filled with a predetermined amount of extraction material such as coffee ground, tea leaves, and herbal medicine, and from which the extracted material can exudate when hot water is poured in can be used to form the bag main body 11. Known examples of typical exudation sheets include single- or composite-fiber woven or unwoven fabric of synthetic fibers such as polyester, nylon, polyethylene, polypropylene, and vinylon, semisynthetic fibers such as rayon, and natural fibers such as kozo (paper mulberry) and mitsumata (oriental paperbush), mixed papers made of manilla hemp, wood pulp, polypropylene fibers, and the like, and papers such as tea bag base paper. While the present invention can use these sheets, the water permeable filter sheet material preferably contains biodegradable fibers in view of the disposability of the drip bag after use. Examples of the biodegradable fibers include polylactate, polybutylene succinate, and polyethylene succinate. To provide an appropriate steaming effect on coffee grounds during dripping, the porosity of the fiber layers is preferably adjusted when manufacturing the water permeable filter sheet with such fiber materials, so that a layer to be in direct contact with the coffee ground is "sparse" and a layer to not be in direct contact with the coffee ground is "dense," forming a sparse-dense composite layer structure. Furthermore, this porosity is preferably adjusted so that the layer to be in direct contact with the coffee ground has a high hydrophobic fiber content and the layer to not be in direct contact with the coffee ground has a low hydrophobic fiber content (Japanese Patent No. 3674486).

In the case of the grip bag 1A shown in Fig. 1A, the bag main body 11 is a three side-sealed flat bag that is rectangular in a plan view, and has two opposed surfaces. In the case of a drip bag where an extraction material such as coffee ground, tea leaves, and herbal medicine is filled into the bag main body 11 and sealed in the bag main body, an unsealing guide line along the top side 11a can be formed at or near the top side 11a of the bag main body 11. The unsealing guide line is made of perforations, a weak seal, or the like. In view of easy unsealing, the perforations are preferably microperforations. The weak seal is adjusted in terms of sealing strength so that the sealed portion will not exfoliate unintentionally by forces other than an opening operation but exfoliate easily if the hooking portions 23 on the front and back of the bag main body 11 are pulled in opposite directions. In the present invention, the bottom and lateral sides of the bag main body 11 may be gusseted as appropriate.

The net planar dimensions of the bag main body 11 can be set as appropriate depending on the size of cups or containers to hook the drip bag on. For example, the planar dimensions may be adjusted to a size usable with commercially available coffee cups.

### Thin plate-like member:

The thin plate-like members 20 can be formed by stamping a thin plate-like material such as a cardboard and a plastic sheet. In view of the disposability of the drip bag 1A after use, the thin plate-like material is also preferably made of a biodegradable material such as polylactate, polybutylene succinate, and polyethylene succinate.

### Modifications of drip bag:

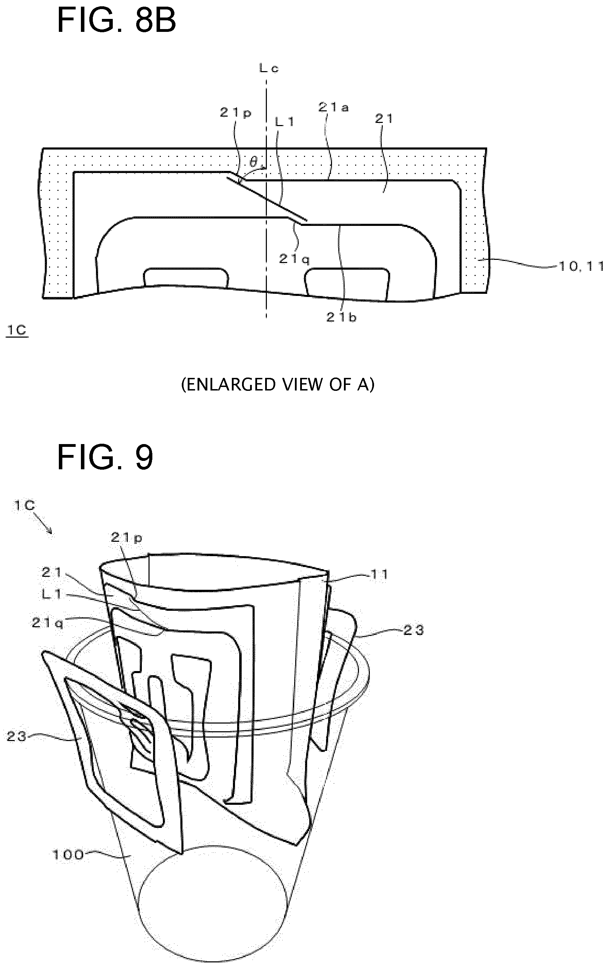

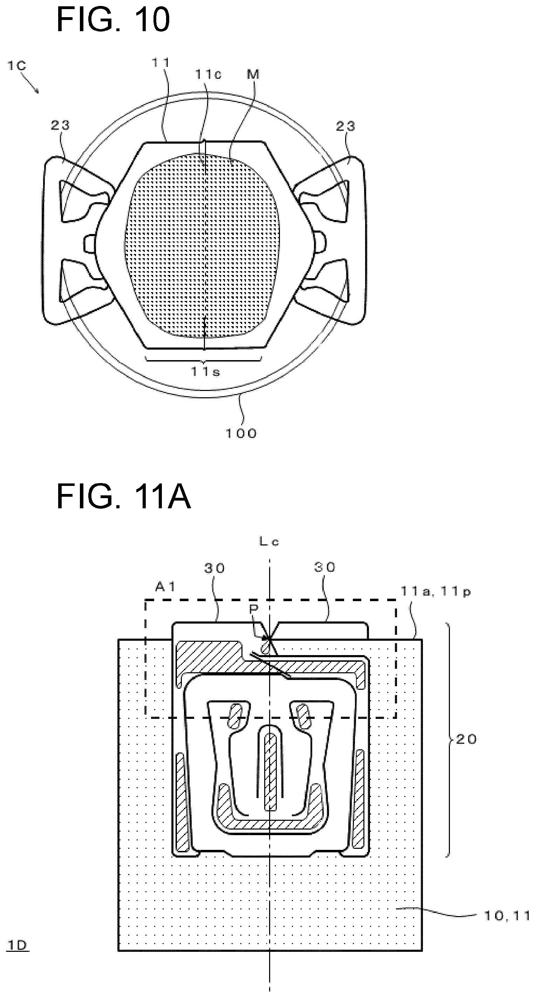

The drip bag according to the present invention may be modified in various ways. For example, a drip bag 1C shown in Fig. 8A is made of the bag main body 11 and the thin plate-like members 20, in a similar manner as with the foregoing drip bag 1A. However, as shown in Fig. 8B, the top side 21a of the upper bonded portion 21 includes an oblique top side portion 21p formed on the right of the oblique folding line L1 along the upper end of the oblique folding line L1 at a distance from the oblique folding line L1. The bottom side 21b of the upper bonded portion 21 includes an oblique bottom side portion 21q formed on the left of the oblique folding line L1 along the lower end of the oblique folding line L1 at a distance from the oblique folding line L1. Since the upper bonded portion 21 includes the oblique top side portion 21p at the top side 21a on either one side of the left and right of the oblique folding line L1 and the oblique bottom side portion 21q at the bottom side 21b on the other side of the left and right of the oblique folding line L1, the upper bonded portion 21 is likely to twist harder about the oblique folding line L1 and settles in a twisted shape. If the drip bag 1C is hooked on the cup 100 while the hooking portions 23 on the front and back of the bag main body 11 are pulled in opposite directions as shown in Fig. 9, then a hard twist occurs about the oblique folding lines L1. Due to the twist, the upper bonded portions 21 are curved with a greater radius of curvature than in the case where only the oblique folding lines L1 are formed in the upper bonded portions 21, and the opening state of the bag main body settles in the curved state. As a result, the opening of the drip bag 1C is more roundly shaped as shown in Fig. 10. With the side areas 11s of the bag main body 11 straightened depending on the opening diameter of the cup 100, the opening becomes a rounded regular hexagon in shape, approaching a circular shape.

If the upper bonded portions 21 do not have the oblique top side portions 21p or the oblique bottom side portions 21q like in the foregoing drip bag 1A, then the force acting on the upper bonded portions 21 when the hooking portions 23 on the front and back of the bag main body 11 are pulled in opposite directions tends to concentrate on the narrow areas between the top ends of the oblique folding lines L1 and the top sides 21a of the upper bonded portions and the narrow areas between the bottom ends of the oblique folding lines L1 and the bottom sides 21b of the upper bonded portions. If the oblique top side portion 21p is located on either one side of the left and right of the upper bonded portion 21 and the oblique bottom side portion 21q is located on the other side like in the drip bag 1C shown in Fig. 8A, the force acting on the upper bonded portions 21 when the hooking portions 23 on the front and back of the bag main body 11 are pulled in opposite directions is distributed over wider areas. This distribution can reduce the risk of breakage of the upper bonded portions 21 near the top ends or near the bottom ends of the oblique folding lines L1 even if the hooking portions 23 on the front and back of the bag main body 11 are pulled with great force in opposite directions.

A drip bag 1D shown in Fig. 11A is made of the bag main body 11 and the thin plate-like members 20 like the foregoing drip bags 1A to 1C. The extraction material is sealed in the bag main body 11, with the top side 11a of the bag main body 11 as a folding ridge of the water permeable filter sheet. An easily cleavable line 11p is formed along the ridge by perforation or the like. The drip bag 1D is a drip bag with unsealing protrusions, where a pair of unsealing protrusions 30 extended from the upper bonded portions 21 on the front and back of the bag main body 11 protrudes alternately from the top side 11a of the bag main body 11.

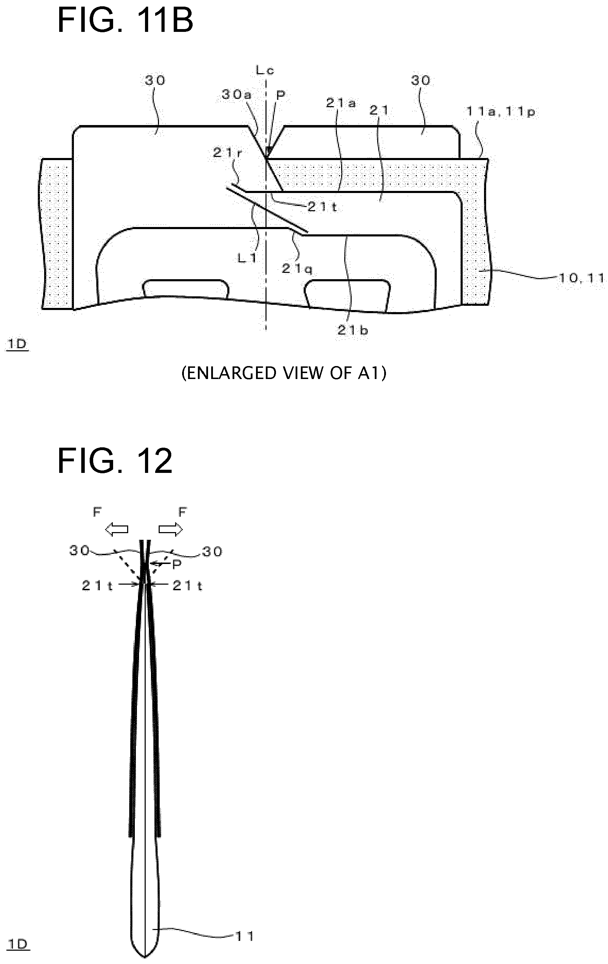

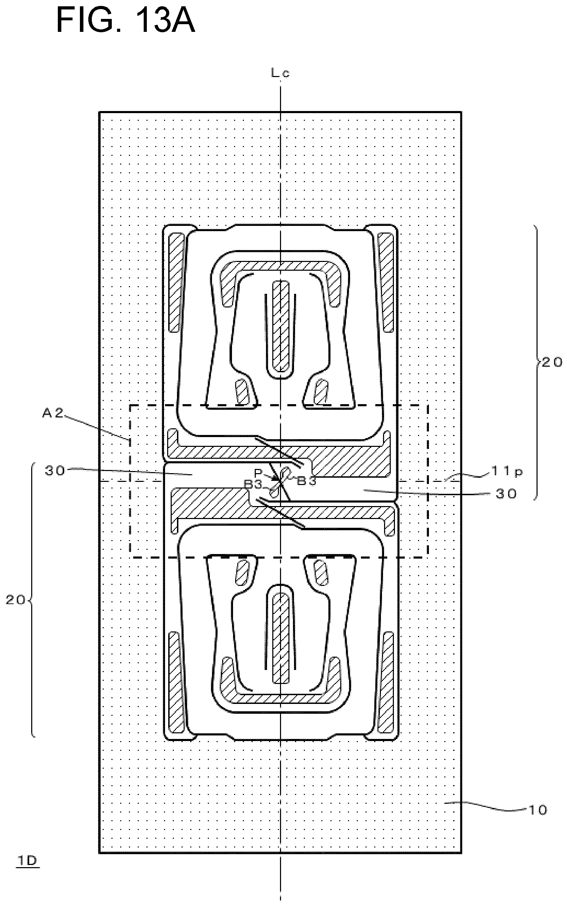

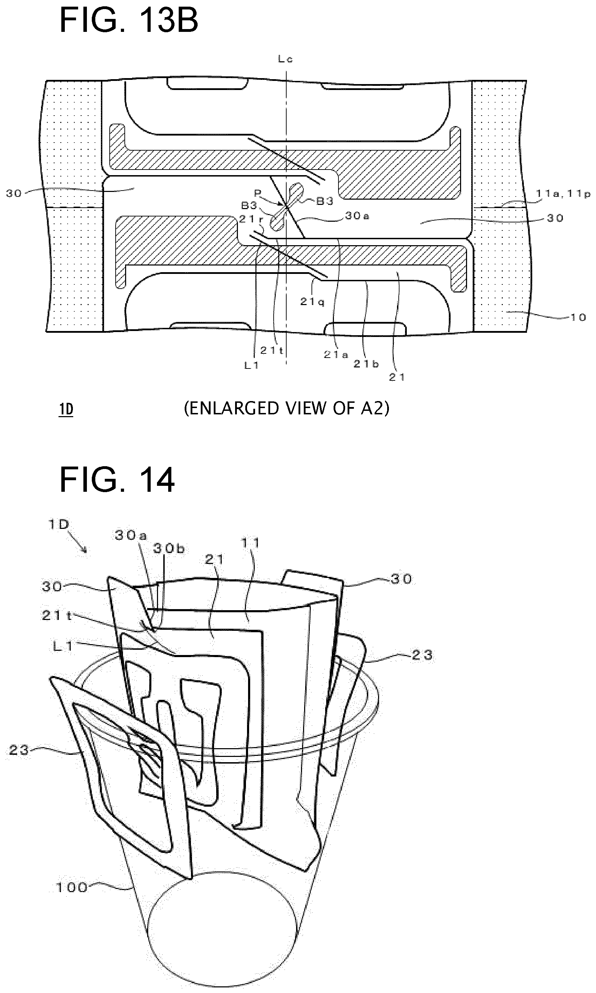

Fig. 11B is a partial enlarged view of Fig. 11A. Fig. 13A is a developed view of the drip bag 1D where the folding ridge to form the top side 11a of the bag main body 11 of the drip bag 1D with unsealing protrusions is spread out flat. Fig. 13B is a partial enlarged view thereof. In the mode of the drip bag according to the present invention with a pair of unsealing protrusions, the pair of thin plate-like members 20 on the front and back of the bag main body 11 is preferably located symmetrically about a point as in the developed view shown in Fig. 13A. In this developed view, the pair of thin plate-like members 20 on the front and back are in contact with each other without a gap therebetween, and the pair of unsealing protrusions 30 are arranged alternately and do not overlap. This structure allows for a reduction in the number of stamping chips generated when the pair of thin plate-like members 20 on the front and back is manufactured by stamping.

An intersection P of lateral sides 30a of the pair of unsealing protrusions 30 with the top side 11a of the bag main body 11 falls on the width centerline Lc of the upper bonded portions 21. The unsealing protrusions 30 and the bag main body 11 are bonded in a bonding area B3 at the intersection P. The bonding area B3 is located across the unsealing protrusions 30 on the front and back of the bag main body 11. On each of the front and back of the bag main body 11, the bonding area B3 is located not to cross the width centerline Lc of the upper bonded portions 21 (Fig. 13B).

Since the unsealing protrusions 30 and the bag main body 11 are bonded in this bonding area B3, the force to pull the pair of unsealing protrusions 30 in opposite directions in opening the bag main body 11 acts effectively on the intersection P. Cleavage starts at the easily cleavable line located at the intersection P, whereby the bag main body 11 can be easily unsealed and opened.

Moreover, the drip bag 1D has cuts 21t formed by extending the top sides 21a of the upper bonded portions 21 where the unsealing protrusions 30 are not extended, into the roots of the unsealing protrusions 30 in the midsections of the upper bonded portions 21 in the width direction. The cuts 21t extend in the width direction of the upper bonded portions 21 above the oblique folding lines L1 beyond the width centerline Lc of the upper bonded portions 21. As shown in Fig. 12, if the unsealing protrusions 30 on the front and back of the bag main body 11 are pulled in opposite directions in unsealing the bag main body 11, forces F to pull the unsealing protrusions 30 act on the foregoing intersection P by the principle of leverage with the cuts 21t as fulcrums, and the pair of unsealing protrusions 30 are bent in opposite directions as shown by the broken lines. The presence of the cuts 21t can thus also facilitate the unsealing of the bag main body 11.

Next, the hooking portions 23 on the front and back of the bag main body 11 are pulled in opposite directions, and the drip bag 1D is hooked on the cup 100 as shown in Fig. 14. The opening of the bag main body 11 then takes on substantially the same round-cornered hexagonal shape as that of the foregoing drip bag 1C having no unsealing protrusions, although the areas of the upper bonded portions 21 where the unsealing protrusions 30 are located have a greater length in the vertical direction of the bag main body. More specifically, in the case of this drip bag 1D, the unsealing protrusions 30 extended from the upper bonded portions 21 on both the front and back of the bag main body 11 protrude alternately from the top side 11a of the bag main body 11, and the roots of the unsealing protrusions 30 cross the width centerline Lc of the upper bonded portions 21. The upper bonded portions 21 and the unsealing protrusions 30 are separated by the cuts 21t, and the bonding area B3 is formed not to cross the width centerline Lc of the upper bonded portions 21. With the drip bag 1D hooked on the cup 100, ends 30b of the unsealing protrusions 30 located above the cuts 21t are thus lifted from the surfaces of the bag main body 11 as shown in Fig. 14, so that the ends 30b are less likely to affect the shape of the opening of the bag main body. Accordingly, the opening of the bag main body can be prevented from being distorted in shape by the extension of the unsealing protrusions 30 from the upper bonded portions 21.

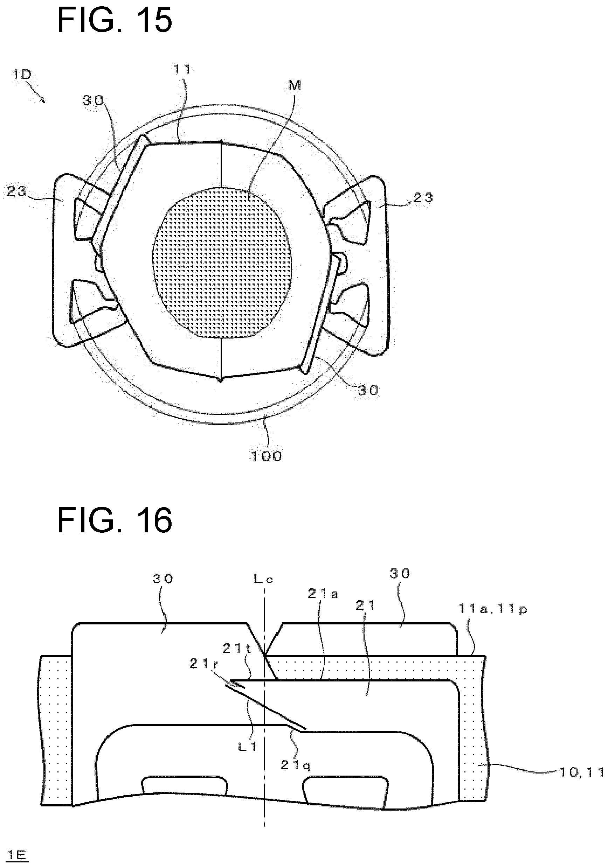

On either one side of the left and right of each oblique folding line L1, an oblique cut 21r along the upper end of the oblique folding line L1 is disposed continuously with the cut 21 at a distance from the oblique folding line L1. On the other side of the left and right of the oblique folding line L1, an oblique bottom side portion 21q along the bottom end of the oblique folding line L1 is disposed on the bottom side 21b of the upper bonded portion 21 at a distance from the oblique folding line L1. Like in the foregoing drip bag 1C, the upper bonded portions 21 thus twist hard about the oblique folding lines L1, and the twisted state is stably maintained. The upper bonded portions 21 thus curve roundly with a large radius of curvature. As shown in Fig. 15, the shape of the opening can thus be made close to a round-cornered regular hexagon.

In the present embodiment, the cuts 21t are formed straight in the width direction of the bag main body. However, this is not restrictive. For example, the cuts 21t may be oblique to the width direction of the bag main body 11.

In the present invention, the foregoing area A1 (Fig. 11B) of the drip bag 1D may be modified like a drip bag 1E shown in Fig. 16. In this drip bag 1E, the top end of the oblique cut 21r on the upper right of the oblique folding line L1 is continuous with the cut 21t.

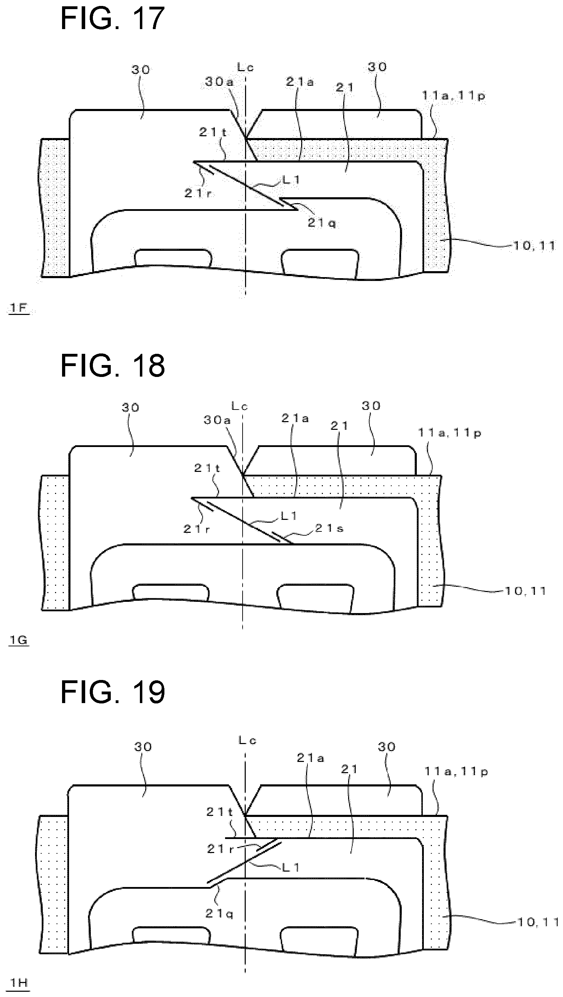

The foregoing area A1 may be modified like in a drip bag 1F shown in Fig. 17. In this drip bag 1F, the upper bonded portion 21 has an oblique cut 21r on the upper left of the oblique folding line L1, and an oblique bottom side portion 21q on the lower right of the oblique folding line L1.

The foregoing area A1 may be modified like in a drip bag 1G shown in Fig. 18. In this drip bag 1G, the upper bonded portion 21 has an oblique cut 21r on the upper left of the oblique folding line L1, and an oblique cut 21s on the lower right of the oblique folding line L1. The oblique cut 21s is formed along the bottom end of the oblique folding line L1 at a distance from the oblique folding line L1.

Of the foregoing drip bags 1D, 1E, 1F, and 1G, the drip bags 1D, 1E, and 1F are preferable since the opening of the bag main body 11 can easily be curved more roundly with higher reliability in the upper bonded portions 21. Of these, the drip bag 1D is especially preferable.

The area A1 of the foregoing drip bag 1D may be modified like in a drip bag 1H shown in Fig. 19. In this drip bag 1H, the oblique folding line L1 is reversely tilted with respect to the centerline Lc as compared to the drip bag 1D shown in Fig. 11B. There is no unsealing protrusion 30 formed above the top end of the oblique folding line L1, and an unsealing protrusion 30 is formed above the bottom end of the oblique folding line L1. An oblique cut 21r is located on the upper left of the oblique folding line L1, and an oblique bottom side portion 21q is located on the lower right of the oblique folding line L1.

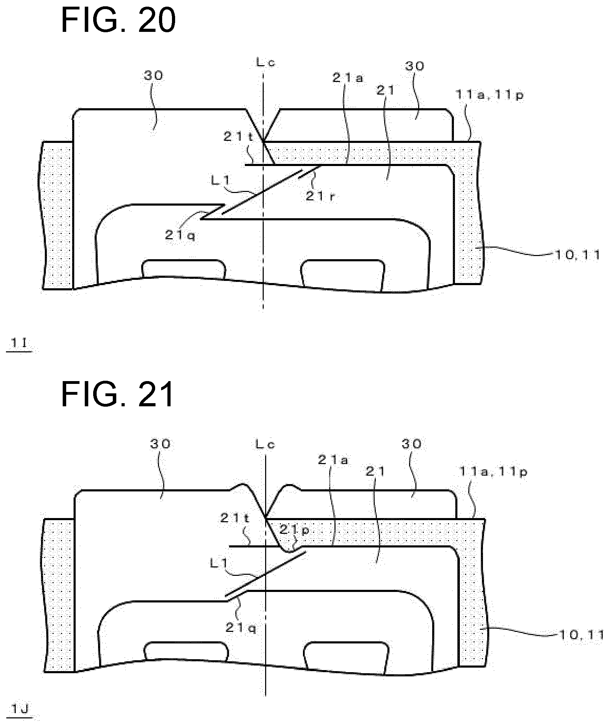

The area A1 of the foregoing drip bag 1D may be modified like a drip bag 1I shown in Fig. 20. In this drip bag 1I, the oblique folding line L1 is reversely tilted with respect the centerline Lc as compared to the drip bag 1D shown in Fig. 11B. An oblique cut 21r is located on the upper right of the oblique folding line L1, and an oblique bottom side portion 21q is located on the lower left of the oblique folding line L1.

The foregoing area A1 may be modified like in a drip bag 1J shown in Fig. 21. In this drip bag 1J, the oblique folding line L1 is reversely tilted with respect to the centerline Lc as compared to the drip bag 1D shown in Fig. 11B. An oblique top side portion 21p is located on the upper left of the oblique folding line L1, and an oblique bottom side portion 21q is located on the lower right of the oblique folding line L1. Even with this drip bag 1J, if the folding ridge to form the top side 11a of the bag main body 11 is spread out flat, the thin plate-like members on the front and back of the bag main body are located symmetrically about the intersection P between the lateral sides of the unsealing protrusions 30 and the top side 11a of the bag main body 11. The pair of unsealing protrusions 30 are formed alternately not to overlap each other but to be in contact with each other without a gap.

As discussed with the drip bags 1H, 1I, and 1J, the unsealing protrusions 30 may be formed not above the top ends of the oblique folding lines L1 but above the bottom ends of the oblique folding lines L1.

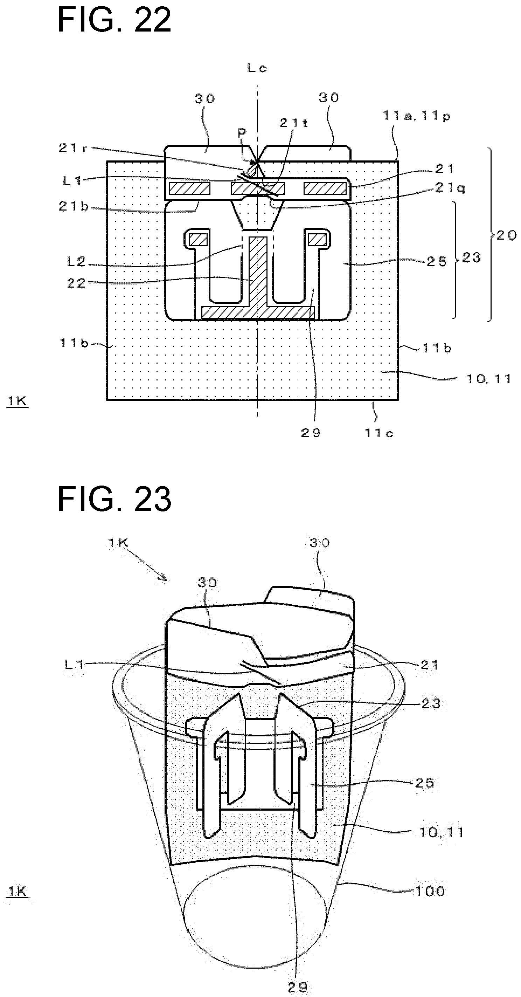

The hooking portions of the drip bag according to the present invention may be configured in various ways as long as the upper bonded portions have the oblique folding lines L1 intersecting the width centerline of the upper bonded portions. For example, a drip bag 1K shown in Fig. 22 is configured so that the upper bonded portion 21 of each of the thin plate-like members 20 on the front and back of the bag main body 11 has the oblique folding line L1, the cut 21t, and the oblique cut 21r like the drip bag 1D shown in Fig. 11A. The bottom side 21b of the upper bonded portion has oblique bottom side portions 21q.

Moreover, an easily cleavable line such as that made of perforations is formed at the top side 11a of the bag main body 11. The top side 11a of the bag main body thus easily opens when the unsealing protrusions 30 on the front and back of the bag main body are pulled in opposite directions.

However, the hooking portions 23 of the drip bag 1K are pulled out in directions different from the hooking portions 23 of the drip bag 1D. As the hooking portions 23 of the drip bag 1K, ones to be pulled out from the lateral side-11b sides of the bag main body 11 like hinge leaves about folding lines L2 with the central portion 22 as a fixed end are located laterally symmetrically about the width centerline Lc of the upper bonded portions 21. The hooking portions 23 of this drip bag 1K have hooking recesses 29 open toward the bottom side of the bag main body. Hook parts 25 lie outside the recesses 29 in the width direction of the bag main body. The hook parts 25 can be hooked on the opening wall of the cup 100 as shown in Fig. 23.

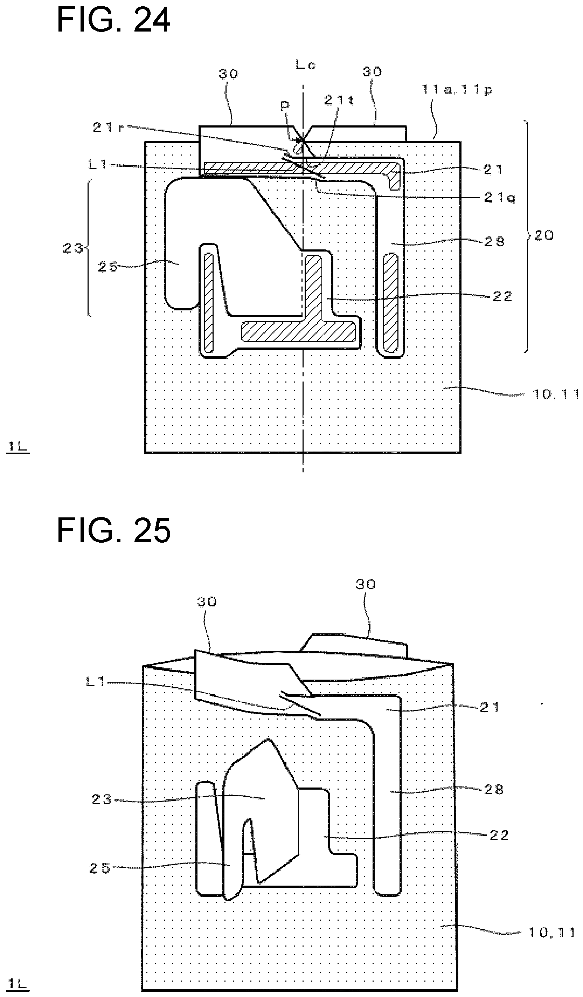

A drip bag 1L shown in Fig. 24 is configured so that each of the thin plate-like members 20 on the front and back of the bag main body has only one hooking portion 23 to be pulled out like a hinge leaf, on either one side of the left and right of the width centerline Lc of the upper bonded portion 21. As shown in Fig. 25, this hooking portion 23 is pulled out from the bag main body 11 with the centerline Lc as the fixed end.

Like the drip bag 1D shown in Fig. 11A, the top side 11a of the bag main body of this drip bag 1L also easily opens when the unsealing protrusions 30 on the front and back of the bag main body are pulled in opposite directions.

In the present invention, the foregoing modified portions can be combined as appropriate.

Like the drip bags described in Patent Documents 2 and 3, the drip bag according to the present invention can be industrially manufactured by using a drip bag manufacturing sheet that is a long water permeable filter sheet to which thin plate-like members of predetermined shape are bonded at predetermined distances.

### Reference Signs List

1A, 1B, 1C, 1D, 1E, 1F, 1G, 1H, 1I, 1J, 1K, 1L drip bag
10 water permeable filter sheet
11 bag main body
11a top side
11b lateral side
11c bottom side
11p easily cleavable line
11s side area
20 thin plate-like member
21 upper bonded portion
21a top side of upper bonded portion
21b bottom side of upper bonded portion
21p oblique top side portion
21q oblique bottom side portion
21r oblique cut
21s oblique cut
21t cut
22 central portion
23 hooking portion
24 arm part
24a, 24b branched arm part
24c arm part connection part
25 hook part
25a connection part
26 first central bonded portion
27 second central bonded portion
28 reinforcing portion
29 hooking recess
30 unsealing protrusion
30a lateral side of unsealing protrusion in midsection of thin plate-like member in width direction
30b end of unsealing protrusion
100 cup
B1, B2, B3 bonding area
Lc width centerline of upper bonded portion
Lc' width centerline of bag main body
L1 oblique folding line
L2 folding line
Lv imaginary line
Lx vertical folding line
M extraction material
P intersection of lateral side of unsealing protrusion with top side of bag main body
θ angle that oblique folding line L1 forms with respect to width centerline Lc of bag main body
W1 length of oblique folding line in width direction of bag main body
W2 width of upper bonded portion
W3a, W3b distance between upper bonded portion and lateral side of bag main body
W4 width of bag main body

## Claims

1. A drip bag (1A; 1B; 1C; 1D; 1E; 1F; 1G; 1H; 1I; 1J) comprising a bag main body (11) made of a water permeable filter sheet (10) and thin plate-like members (20) disposed on two opposed outer surfaces of the bag main body (11), wherein:
on each of the two opposed outer surfaces of the bag main body (11), the thin plate-like member (20) includes an upper bonded portion (21) fixed to the bag main body (11) along a top side (11a) of the bag main body (11), a central portion (22) fixed to the bag main body (11) on a bottom-side (11c) side of the bag main body (11) relative to the upper bonded portion (21), and a hooking portion (23) continuous with the central portion (22) and disposed to be capable of being pulled out from the bag main body (11),
**characterized in that**
the upper bonded portion (21) has an oblique folding line (L1) obliquely intersecting a width centerline (Lc) of the upper bonded portion (21).

2. The drip bag (1A; 1B; 1C; 1D; 1E; 1F; 1G; 1H; 1I; 1J) according to claim 1, wherein the oblique folding line (L1) does not reach a top side (21a) and a bottom side (21b) of the upper bonded portion (21).

3. The drip bag (1A; 1B; 1C; 1D; 1E; 1F; 1G; 1H; 1I; 1J) according to claim 2, wherein the oblique folding line (L1) is a cut.

4. The drip bag (1C; 1D; 1E; 1F; 1G; 1H; 1I; 1J) according to any one of claims 1 to 3, wherein an oblique top side portion (21p) of the upper bonded portion (21) or an oblique cut (21r) extending from a top side (21a) of the upper bonded portion (21) along a top end of the oblique folding line (L1) is located on either one side of left and right of the oblique folding line (L1), and an oblique bottom side portion (21q) of the upper bonded portion (21) or an oblique cut (21s) extending from a bottom side (21b) of the upper bonded portion (21) along a bottom end of the oblique folding line (L1) is located on the other side of the left and right of the oblique folding line (L1).

5. The drip bag (1A) according to any one of claims 1 to 4, wherein:
on each of the two opposed outer surfaces of the bag main body (11), the hooking portion (23) includes an arm part (24) continuous with the central portion (22) and a hook part (25) continuous with the arm part (24);
the arm part (24) extends toward the top side (11a) of the bag main body (11) from the central portion (22), and can be pulled out from the bag main body (11) with a central portion-side end as a fixed end; and
the hook part (25) is formed to be continuous with an upper portion of the arm part (24) and extend from a continuous portion of the arm part (24) toward the bottom side (11c) of the bag main body (11).

6. The drip bag (1A) according to claim 5, wherein:
on each of the two opposed outer surfaces of the bag main body (11), the arm part (24) has parts (24a, 24b) that are juxtaposed at a distance from each other with the width centerline (Lc) of the upper bonded portion (21) therebetween; and
the juxtaposed parts (24a, 24b) are connected at a top into a connection part (24c), and the connection part (24c) is continuous with the hook part (25).

7. The drip bag (1D) according to any one of claims 1 to 6, wherein the bag main body (11) is filled with an extraction material (M) and the bag main body (11) is sealed.

8. The drip bag (1D) according to claim 7, wherein: an easily cleavable line (11p) is formed at the top side (11a) of the bag main body (11); and a pair of unsealing protrusions (30) extended from the upper bonded portions (21) on the two opposed outer surfaces of the bag main body (11) protrudes alternately from the top side (11a) of the bag main body (11).

9. The drip bag (1D) according to claim 8, wherein the unsealing protrusions (30) and the bag main body (11) are bonded at an intersection (P) between lateral sides (30a) of the pair of unsealing protrusions (30) and the top side (11a) of the bag main body (11) in midsections of the thin plate-like members (20) in a width direction.

10. The drip bag (1D) according to claim 8 or 9, wherein cuts (21t) are formed in midsections of the upper bonded portions (21) in a width direction, the cuts (21t) being formed by extending top sides (21a) of the upper bonded portions (21), at which the unsealing protrusions (30) are not extended, into roots of the unsealing protrusions (30).

## Patentansprüche

1. Tropfbeutel (1A; 1B; 1C; 1D; 1E; 1F; 1G; 1H; 1I; 1J), umfassend einen Beutelhauptkörper (11), der aus einer wasserdurchlässigen Filterschicht (10) hergestellt ist, und dünne plattenförmige Elemente (20), die auf zwei gegenüberliegenden Außenflächen des Beutelhauptkörpers (11) angeordnet sind, wobei:
das dünne plattenförmige Element (20) auf jeder der beiden gegenüberliegenden Außenflächen des Beutelhauptkörpers (11) einen oberen verbundenen Abschnitt (21), der an dem Beutelhauptkörper (11) entlang einer Oberseite (11a) des Beutelhauptkörpers (11) befestigt ist, einen Mittelabschnitt (22), der an dem Beutelhauptkörper (11) an einer Seite der Unterseite (11c) des Beutelhauptkörpers (11) relativ zu dem oberen verbundenen Abschnitt (21) befestigt ist, und einen Einhängeabschnitt (23), der mit dem Mittelabschnitt (22) durchgehend ist und so angeordnet ist, dass er aus dem Beutelhauptkörper (11) herausziehbar ist, aufweist,
**dadurch gekennzeichnet, dass**
der obere verbundene Abschnitt (21) eine schräge Faltlinie (L1) hat, die eine Breitenmittellinie (Lc) des oberen verbundenen Abschnitts (21) schräg schneidet.

2. Tropfbeutel (1A; 1B; 1C; 1D; 1E; 1F; 1G; 1H; 1I; 1J) nach Anspruch 1, wobei die schräge Faltlinie (L1) eine Oberseite (21a) und eine Unterseite (21b) des oberen verbundenen Abschnitts (21) nicht erreicht.

3. Tropfbeutel (1A; 1B; 1C; 1D; 1E; 1F; 1G; 1H; 1I; 1J) nach Anspruch 2, wobei die schräge Faltlinie (L1) ein Schnitt ist.

4. Tropfbeutel (1C; 1D; 1E; 1F; 1G; 1H; 1I; 1J) nach einem der Ansprüche 1 bis 3, wobei ein schräger oberer Seitenabschnitt (21p) des oberen verbundenen Abschnitts (21) oder ein schräger Schnitt (21r), der sich von einer Oberseite (21a) des oberen verbundenen Abschnitts (21) entlang eines oberen Endes der schrägen Faltlinie (L1) erstreckt, sich entweder auf einer Seite links oder rechts von der schrägen Faltlinie (L1) befindet, und ein schräger unterer Seitenabschnitt (21q) des oberen verbundenen Abschnitts (21) oder ein schräger Schnitt (21s), der sich von einer unteren Seite (21b) des oberen verbundenen Abschnitts (21) entlang eines unteren Endes der schrägen Faltlinie (L1) erstreckt, sich auf der anderen Seite der linken oder rechten Seite der schrägen Faltlinie (L1) befindet.

5. Tropfbeutel (1A) gemäß einem der Ansprüche 1 bis 4, wobei:
der Einhängeabschnitt (23) auf jeder der beiden gegenüberliegenden Außenflächen des Beutelhauptkörpers (11) einen Armteil (24), der mit dem Mittelabschnitt (22) durchgehend ist, und einen Einhängeteil (25), der mit dem Armteil (24) durchgehend ist, umfasst;
der Armteil (24) sich von dem Mittelabschnitt (22) in Richtung der Oberseite (11a) des Beutelhauptkörpers (11) erstreckt und aus dem Beutelhauptkörper (11) herausgezogen werden kann, wobei ein Mittelabschnitt-seitiges Ende ein festes Ende ist; und
der Einhängeteil (25) so geformt ist, dass er mit einem oberen Abschnitt des Armteils (24) durchgehend ist und sich von einem durchgehenden Abschnitt des Armteils (24) in Richtung der Unterseite (11c) des Beutelhauptkörpers (11) erstreckt.

6. Tropfbeutel (1A) gemäß Anspruch 5, wobei:
auf jeder der beiden gegenüberliegenden Außenflächen des Beutelhauptkörpers (11) der Armteil (24) Teile (24a, 24b) aufweist, die in einem Abstand voneinander nebeneinander angeordnet sind, wobei die Breitenmittellinie (Lc) des oberen verbundenen Abschnitts (21) dazwischen liegt; und
die nebeneinander angeordneten Teile (24a, 24b) oben zu einem Verbindungsteil (24c) verbunden sind, und der Verbindungsteil (24c) ist durchgehend mit dem Einhängeteil (25).

7. Tropfbeutel (1D) nach einem der Ansprüche 1 bis 6, wobei der Beutelhauptkörper (11) mit einem Extraktionsmaterial (M) gefüllt und der Beutelhauptkörper (11) versiegelt ist.

8. Tropfbeutel (1D) nach Anspruch 7, wobei: eine leicht teilbare Linie (11p) an der Oberseite (11a) des Beutelhauptkörpers (11) ausgebildet ist; und ein Paar von Entsiegelungsvorsprüngen (30), die sich von den oberen verbundenen Abschnitten (21) an den beiden gegenüberliegenden Außenflächen des Beutelhauptkörpers (11) erstrecken, abwechselnd von der Oberseite (11a) des Beutelhauptkörpers (11) vorsteht.

9. Tropfbeutel (1D) nach Anspruch 8, wobei die Entsiegelungsvorsprünge (30) und der Beutelhauptkörper (11) an einem Schnittpunkt (P) zwischen lateralen Seiten (30a) des Paares von Entsiegelungsvorsprüngen (30) und der Oberseite (11a) des Beutelhauptkörpers (11) in Mittelteilen der dünnen plattenförmigen Elemente (20) in einer Breitenrichtung verbunden sind.

10. Tropfbeutel (1D) nach Anspruch 8 oder 9, wobei Schnitte (21t) in Mittelteilen der oberen verbundenen Abschnitte (21) in einer Breitenrichtung ausgebildet sind, wobei die Schnitte (21t) durch Ausdehnen der Oberseiten (21a) der oberen verbundenen Abschnitte (21), an denen die Entsiegelungsvorsprünge (30) nicht ausgedehnt sind, bis in die Ansätze der Entsiegelungsvorsprünge (30) ausgebildet sind.

## Revendications

1. Sachet d'égouttage (1A ; 1B ; 1C ; 1D ; 1E ; 1F ; 1G ; 1H ; 1I ; 1J) comprenant un corps principal de sachet (11) constitué d'une feuille filtrante perméable à l'eau (10) et d'éléments minces en forme de plaque (20) disposés sur deux surfaces extérieures opposées du corps principal de sachet (11), dans lequel :
sur chacune des deux surfaces extérieures opposées du corps principal du sachet (11), l'élément mince en forme de plaque (20) comprend une partie collée supérieure (21) fixée au corps principal du sachet (11) le long d'un côté supérieur (11a) du corps principal du sachet (11), une partie centrale (22) fixée au corps principal du sachet (11) sur un côté inférieur (11c) du corps principal du sachet (11) par rapport à la partie collée supérieure (21), et une partie d'accrochage (23) continue avec la partie centrale (22) et disposée de manière à pouvoir être retirée du corps principal du sachet (11),
**caractérisé en ce que**
la partie collée supérieure (21) présente une ligne de pliage oblique (L1) coupant obliquement une ligne centrale de largeur (Lc) de la partie collée supérieure (21).

2. Sachet d'égouttage (1A ; 1B ; 1C ; 1D ; 1E ; 1F ; 1G ; 1H ; 1I ; 1J) selon la revendication 1, dans lequel la ligne de pliage oblique (L1) n'atteint pas un côté supérieur (21a) et un côté inférieur (21b) de la partie collée supérieure (21).

3. Sachet d'égouttage (1A ; 1B ; 1C ; 1D ; 1E ; 1F ; 1G ; 1H ; 1I ; 1J) selon la revendication 2, dans lequel la ligne de pliage oblique (L1) est une coupe.

4. Sachet d'égouttage (1C ; 1D ; 1E ; 1F ; 1G ; 1H ; 1I ; 1J) selon l'une quelconque des revendications 1 à 3, dans lequel une partie latérale supérieure oblique (21p) de la partie collée supérieure (21) ou une coupe oblique (21r) s'étendant à partir d'un côté supérieur (21a) de la partie collée supérieure (21) le long d'une extrémité supérieure de la ligne de pliage oblique (L1) est située sur l'un ou l'autre côté de la gauche et de la droite de la ligne de pliage oblique (L1), et une partie latérale inférieure oblique (21q) de la partie collée supérieure (21) ou une coupe oblique (21s) s'étendant à partir d'un côté inférieur (21b) de la partie collée supérieure (21) le long d'une extrémité inférieure de la ligne de pliage oblique (L1) est située de l'autre côté de la gauche et de la droite de la ligne de pliage oblique (L1).

5. Sachet d'égouttage (1A) selon l'une quelconque des revendications 1 à 4, dans lequel :
sur chacune des deux surfaces extérieures opposées du corps principal du sachet (11), la partie d'accrochage (23) comprend une partie de bras (24) continue avec la partie centrale (22) et une partie de crochet (25) continue avec la partie de bras (24) ;
la partie de bras (24) s'étend vers le côté supérieur (11a) du corps principal du sachet (11) à partir de la partie centrale (22), et peut être retirée du corps principal du sachet (11) avec une extrémité du côté de la partie centrale comme extrémité fixe ; et
la partie crochet (25) est formée pour être continue avec une partie supérieure de la partie bras (24) et s'étendre à partir d'une partie continue de la partie bras (24) vers le côté inférieur (11c) du corps principal du sachet (11).

6. Sachet d'égouttage (1A) selon la revendication 5, dans lequel :
sur chacune des deux surfaces extérieures opposées du corps principal du sachet (11), la partie de bras (24) a des parties (24a, 24b) qui sont juxtaposées à distance les unes des autres avec la ligne centrale de largeur (Lc) de la partie collée supérieure (21) entre elles ; et
les parties juxtaposées (24a, 24b) sont connectées en haut en une partie de connexion (24c), et la partie de connexion (24c) est continue avec la partie de crochet (25).

7. Sachet d'égouttage (1D) selon l'une quelconque des revendications 1 à 6, dans lequel le corps principal du sachet (11) est rempli d'un matériau d'extraction (M) et le corps principal du sachet (11) est scellé.

8. Sachet d'égouttage (1D) selon la revendication 7, dans lequel : une ligne facilement clivable (11p) est formée sur le côté supérieur (11a) du corps principal du sachet (11) ; et une paire de saillies de descellement (30) étendues à partir des parties collées supérieures (21) sur les deux surfaces extérieures opposées du corps principal du sachet (11) fait saillie alternativement à partir du côté supérieur (11a) du corps principal du sachet (11).

9. Sachet d'égouttage (1D) selon la revendication 8, dans lequel les saillies de descellement (30) et le corps principal du sachet (11) sont collés à une intersection (P) entre des côtés latéraux (30a) de la paire de saillies de descellement (30) et le côté supérieur (11a) du corps principal du sachet (11) dans des sections médianes des éléments minces en forme de plaque (20) dans le sens de la largeur.

10. Sachet d'égouttage (1D) selon la revendication 8 ou 9, dans lequel des coupes (21t) sont formées dans des sections médianes des parties collées supérieures (21) dans le sens de la largeur, les coupes (21t) étant formées en étendant des côtés supérieurs (21a) des parties collées supérieures (21), au niveau desquelles les saillies de descellement (30) ne sont pas étendues, dans des bases des saillies de descellement (30).
